# EUROPÄISCHE PATENTSCHRIFT

(11) **EP 2 951 273 B1**
(45) Veröffentlichungstag und Bekanntmachung des Hinweises auf die Patenterteilung: **27.12.2017**
(21) Anmeldenummer: 14700327.1
(22) Anmeldetag: 09.01.2014
(51) Int. Cl.: B01D 53/14, C01B 3/52, C10K 1/08, F02C 3/20, F02C 7/22, C10K 1/00

(54) **VERFAHREN ZUR ERZEUGUNG VON BRENNSTOFF FÜR EINE GASTURBINE**
METHOD FOR GENERATING FUEL FOR A GAS TURBINE
PROCÉDÉ DE PRODUCTION DE COMBUSTIBLE POUR UNE TURBINE À GAZ

(30) Priorität: 31.01.2013 DE 102013001677
(43) Veröffentlichungstag der Anmeldung: 09.12.2015
(73) Patentinhaber: Linde Aktiengesellschaft, 80331 München (DE)
(72) Erfinder: SELIGER, Andreas, 80796 München (DE); BRANDL, Alexander, 81549 München (DE)
(74) Vertreter: Fischer, Werner
(86) Internationale Anmeldenummer: PCT/EP2014/000030
(87) Internationale Veröffentlichungsnummer: WO 2014/117911

(56) Entgegenhaltungen:
- DE-A1-102010 022 501
- US-A- 4 552 572
- US-A1- 2010 132 553
- LI SUN ET AL: "Rectisol wash process simulation and analysis", JOURNAL OF CLEANER PRODUCTION, Bd. 39, 1. Januar 2013 (2013-01-01), Seiten 321-328, XP055105096, ISSN: 0959-6526, DOI: 10.1016/j.jclepro.2012.05.049

## Beschreibung

Die Erfindung betrifft ein Verfahren zur Zerlegung eines Wasserstoff und Kohlendioxid enthaltenden Einsatzgases, aus dem in einer ersten Gaswäsche durch ein schwefelfreies Waschmittel Kohlendioxid weitgehend selektiv ausgewaschen wird, wobei ein mit Kohlendioxid und co-absorbiertem Wasserstoff beladener Waschmittelstrom anfällt, der nachfolgend in ein Entspannungsgefäß entspannt wird, um co-absorbierten Wasserstoff in die Gasphase zu überführen.
Gaswäschen werden dazu eingesetzt, um bestimmte Komponenten aus Gasgemischen mit Hilfe eines flüssigen Waschmittels auszuwaschen, um dadurch ein Produktgas zu erzeugen. Sie nutzen die Eigenschaft von Flüssigkeiten aus, gasförmige Stoffe zu absorbieren und chemisch oder physikalisch gebunden in Lösung zu halten. Wie gut ein Gas von einer Flüssigkeit absorbiert wird, wird durch den Löslichkeitskoeffizienten ausgedrückt: je besser sich das Gas in der Flüssigkeit löst, desto größer ist sein Löslichkeitskoeffizient. Der Löslichkeitskoeffizient steigt i.Allg. mit fallender Temperatur und steigendem Druck.
Die ausgewaschenen Gaskomponenten werden im Anschluss an die Gaswäsche aus der als Waschmittel eingesetzten Flüssigkeit entfernt, wodurch das Waschmittel regeneriert wird. Während die ausgewaschenen Gaskomponenten entweder entsorgt oder einer wirtschaftlichen Verwertung zugeführt werden, findet das regenerierte Waschmittel normalerweise wieder in der Gaswäsche Verwendung.
Um Wasserstoff in großtechnischem Maßstab zu gewinnen, werden nach dem Stand der Technik Kohlenstoff enthaltende Einsatzstoffe durch Vergasung in ein Syntheserohgas umgesetzt. Ein derartiges Syntheserohgas enthält neben dem erwünschten Wasserstoff auch Kohlenmonoxid sowie eine Reihe anderer unerwünschter Bestandteile, wie Kohlendioxid (CO₂) Schwefelwasserstoff (H₂S) und Kohlenoxidsulfid (COS). Nach zumindest teilweiser Konvertierung des Kohlenmonoxids mit Wasser zu Wasserstoff und Kohlendioxid wird das Syntheserohgas zur Abtrennung der unerwünschten Bestandteile vorzugsweise einer physikalischen Gaswäsche unterzogen. Ein solches Verfahren bietet sich hierfür an, da die Syntheserohgase heute meist unter hohem Druck erzeugt werden, und die Wirksamkeit einer physikalischen Gaswäsche in erster Näherung linear mit dem Betriebsdruck zunimmt. Von besonderer Bedeutung für die Reinigung von Syntheserohgasen ist die Methanolwäsche, bei der flüssiges Methanol mit Temperaturen weit unterhalb von 0°C als Waschmittel eingesetzt wird. In "Gas Separation & Purification", December 1988, Vol 2, p. 171-176, wird eine Methanol-Wäsche beschrieben, bei der aus einem Wasserstoff, Kohlendioxid sowie H₂S und COS enthaltenden Syntheserohgas in zwei aufeinander folgenden Waschschritten Kohlendioxid und Schwefelkomponenten selektiv ausgewaschen werden. Das Syntheserohgas wird hierzu von unten nach oben durch eine Absorberkolonne geführt, in der eine erste und eine zwei Waschsektion übereinander angeordnet sind. Zur Abtrennung des Kohlendioxids wird in der oberen, zweiten Waschsektion unbeladenes Methanol eingesetzt, während in der ersten Waschsektion die Schwefelkomponenten mit einem Teil des Methanols ausgewaschen werden, das bereits bei der Kohlendioxidabtrennung mit Kohlendioxid vorbeladen wurde. Da die Schwefelkomponenten bezüglich Methanol einen Löslichkeitskoeffizienten aufweisen, der um ein Mehrfaches größer ist als derjenige von Kohlendioxid, wird für ihre Abtrennung nur ein Bruchteil der in der zweiten Waschsektion mit Kohlendioxid beladenen Waschmittelmenge benötigt. DE 10 2010 022 501 A1 beschreibt ein Verfahren zum Betreiben einer physikalischen Gaswäsche in einem ersten und einem zweiten Betriebsmodus.

Obwohl Wasserstoff und Kohlenmonoxid bezüglich Methanol einen um mehrere Größenordnungen kleineren Löslichkeitskoeffizienten aufweisen als Kohlendioxid bzw. die im Syntheserohgas enthaltenen Schwefelkomponenten, werden unvermeidlich bei der Wäsche des Syntheserohgases auch Wasserstoff und Kohlenmonoxid in geringen Mengen durch das Methanol-Waschmittel gelöst. Um zu vermeiden, dass sich durch diesen als Co-Absorption bezeichneten Vorgang die Ausbeute an Wasserstoff bzw. Kohlenmonoxid reduziert, werden nach dem Stand der Technik die bei der Gaswäsche mit Kohlendioxid bzw. mit Kohlendioxid und Schwefelkomponenten beladenen Waschmittelströme in einem ersten Regenerierschritt, nach einer vorausgehenden Unterkühlung, jeweils in ein separates Entspannungsgefäß auf einen Druck entspannt, der i.Allg. bei weniger als einem Drittel des Drucks liegt, bei dem die Gaswäsche durchgeführt wird. Bei den in den Entspannungsgefäßen herrschenden Temperatur- und Druckverhältnissen werden die co-absorbierten Stoffe weitgehend in die Gasphase überführt, während die aus dem Syntheserohgas ausgewaschenen unerwünschten Komponenten zum Großteil im Waschmittel gelöst bleiben. Die Gasphasen aus den beiden Entspannungsgefäßen, die neben Wasserstoff und Kohlenmonoxid auch Kohlendioxid bzw. Kohlendioxid und Schwefelkomponenten enthalten, werden nachfolgend verdichtet und vor die Gaswäsche in das zu zerlegende Syntheserohgas zurückgeführt. Auf diese Weise wird zwar eine hohe Produktausbeute erreicht, gleichzeitig wirken sich jedoch insbesondere die für die notwendige Verdichtung der zurückzuführenden Gasphasen anfallenden Kosten negativ auf die Wirtschaftlichkeit des Verfahrens aus.

Aufgabe der vorliegenden Erfindung ist es daher, ein Verfahren der eingangs beschriebenen Art so auszugestalten, dass die Nachteile des Standes der Technik überwunden werden.

Die gestellte Aufgabe wird erfindungsgemäß dadurch gelöst, dass die Wasserstoff enthaltende Gasphase aus dem Entspannungsgefäß abgezogen und einem schwefelfreien, Wasserstoff und Kohlendioxid enthaltenden Gasgemisch zugemischt wird, das in einer parallel zur ersten betriebenen zweiten Gaswäsche als Produkt mit einem Druck entsteht, der geringer ist als der Druck des Einsatzgases.

Sinnvollerweise wird das erfindungsgemäße Verfahren nur dann angewandt, wenn durch die Zumischung der Wasserstoff enthaltenden Gasphase die Qualität des schwefelfreien, Wasserstoff und Kohlendioxid enthaltenden Gasprodukts aus der zweiten Gaswäsche nicht wesentlich verschlechtert wird, sondern erhalten bleibt oder im günstigsten Fall sogar verbessert wird. Unter diesen Voraussetzungen ermöglicht es die Erfindung, die für eine wirtschaftliche Nutzung der Wasserstoff enthaltenden Gasphase anfallenden Kosten im Vergleich zum Stand der Technik zu reduzieren. Dies ist vor allem auf den geringeren Energiebedarf bei der Verdichtung der Gasphase zurückzuführen. Weitere Einsparungen ergeben sich jedoch auch dadurch, dass die für die Gaswäsche eingesetzten Apparate aufgrund des verminderten Umfangs des in der ersten Gaswäsche zu waschenden Gasstroms kleiner dimensioniert werden können.

Mit besonderem Vorzug kann das erfindungsgemäße Verfahren dann eingesetzt werden, wenn aus einem Wasserstoff, Kohlenmonoxid, Kohlendioxid sowie Schwefelkomponenten enthaltenden Syntheserohgas wenigstens Wasserstoff sowie ein Brenngas für eine Gasturbine gewonnen werden sollen. Die Patentanmeldung DE19651282 schlägt in einem solchen Fall vor, das Syntheserohgas in einen ersten und einen zweiten Teilstrom aufzuteilen, wobei der erste Teilstrom nach Konvertierung bzw. Teilkonvertierung durch Wassergas-Shift der ersten Gaswäsche zugeführt und sowohl von Schwefel als auch von Kohlendioxid befreit wird, während der zweite Teilstrom direkt in die zweite Gaswäsche eingeleitet wird, um Schwefelkomponenten weitgehend selektiv abzutrennen und ein vorwiegend aus Wasserstoff, Kohlenmonoxid und Kohlendioxid bestehendes Produktgas zu erzeugen. Typischerweise weist das nichtkonvertierte Gas einen Druck auf, der etwa 3 bis 7 bar höher ist als der des konvertierten bzw. teilkonvertierten Synthesegases. Die beiden Gaswäschen können mit dem gleichen Waschmittel betrieben werden, wodurch es auch möglich ist, eine Einrichtung zur Waschmittelregenerierung gemeinsam zu nutzen.

Als Waschmittel können in den beiden Gaswäschen eine Vielzahl von Flüssigkeiten eingesetzt werden. Vorzugsweise kommen jedoch Methanol, DMPEG, NMP, Amine oder aminbasierte Waschmittel wie MEA, DEA, DIPA oder aus diesen Stoffen gebildete Mischungen als Waschmittel zum Einsatz.

Eine besonders bevorzugte Variante des erfindungsgemäßen Verfahrens sieht vor, dass aus dem der zweiten Gaswäsche zugeführten Einsatzgas durch ein mit Kohlendioxid vorbeladenes Waschmittel Schwefelkomponenten weitgehend selektiv abgetrennt werden, wobei ein mit Schwefelkomponenten, Kohlendioxid und co-absorbiertem Wasserstoff beladener Waschmittelstrom anfällt, der nachfolgend in ein weiteres Entspannungsgefäß entspannt wird, um co-absorbierten Wasserstoff in die Gasphase zu überführen, die nachfolgend dem Einsatzgas zur ersten Gaswäsche zugemischt wird. Optional kann das die Wasserstoff enthaltende Gasphase ganz oder teilweise auch in das Einsatzgas zur zweiten Gaswäsche zurückgeführt werden.

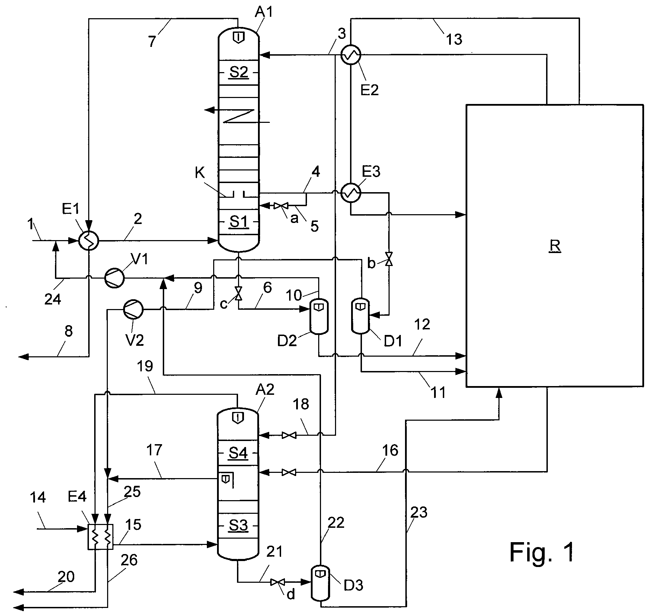

Im Folgenden soll die Erfindung anhand eines in der **Figur 1** schematisch dargestellten Ausführungsbeispiels näher erläutert werden.

Die Figur 1 zeigt eine Methanolwäsche, in der ein konvertiertes und ein unkonvertiertes Syntheserohgas in zwei parallel betriebenen Gaswäschen zerlegt werden.

Über Leitung 1 wird konvertiertes Syntheserohgas, das neben Wasserstoff auch Kohlendioxid und Schwefelkomponenten enthält, in den Wärmetauscher E1 eingeleitet und dort gegen den anzuwärmenden Verfahrensstrom 7 abgekühlt, bevor es über Leitung 2 der ersten, als Absorberkolonne ausgebildeten Wascheinrichtung A1 in ihrem unteren Bereich aufgegeben werden kann. Die Absorberkolonne A1, die typischerweise bei einem Druck zwischen 15 und 75bar betrieben wird, weist eine untere S1 und eine obere Waschsektion S2 auf, die durch einen Kaminboden K voneinander getrennt sind. Das kalte Syntheserohgas 2 wird in der Absorberkolonne A1 nach oben geleitet und dabei in intensiven Kontakt mit Methanolwaschmittel gebracht, das unbeladen über Leitung 3 aus der Regeneriereinrichtung R zugeführt und nach Abkühlung gegen teilweise regeneriertes Methanolwaschmittel 13 im Wärmetauscher E2 in die Waschsektion S2 eingeleitet wird. Über die Leitungen 4 und 5 sowie das Regelorgan a wird bereits mit Kohlendioxid vorbeladenes Methanolwaschmittel aus dem Kaminboden K in die Waschsektion S1 weitergeleitet, wo es vorwiegend Schwefelkomponenten aus dem Syntheserohgas absorbiert, bevor es mit Kohlendioxid und Schwefelkomponenten beladen aus dem Sumpfraum der Absorberkolonne A1 abgezogen und über Leitung 6 weitergeführt wird. Vom Kopf der Absorberkolonne A1 kann ein weitgehend aus Wasserstoff bestehendes Gas 7 abgezogen werden, das nach Anwärmung gegen das Syntheserohgas 1 als Rohwasserstoff 8 beispielsweise einer PSA (nicht dargestellt) zur weiteren Reinigung zugeführt wird.

Der in der Waschsektion S2 vorwiegend mit Kohlendioxid beladene Methanolstrom 4 wird nach Abkühlung im Wärmetauscher E3 über das Drosselorgan b in das Entspannungsgefäß D1 entspannt, während der Methanolstrom 6, der in den beiden Waschsektion S1 und S2 sowohl mit Kohlendioxid als auch mit Schwefelkomponenten beladen wurde, über das Drosselorgan c in das Entspannungsgefäß D2 gelangt. Bei den in den Entspannungsgefäßen D1 und D2 herrschenden Drücken, die etwa einem Drittel des in der Absorberkolonne A1 herrschenden Arbeitsdrucks entsprechen, gelangen vor allem Wasserstoff und Kohlenmonoxid, die bei der Wäsche des Syntheserohgases 2 co-absorbiert wurden, in die entstehenden Gasphasen, die über die Leitungen 9 und 10 abgezogen werden. Die immer noch mit aus dem Syntheserohgas 2 abgetrennten Stoffen beladenen Methanolströme 11 und 12 werden zur weiteren Regenerierung in die Regeneriereinrichtung R eingeleitet.

Um Brennstoff für eine Gasturbine zu gewinnen, wird über Leitung 14 nicht konvertiertes Syntheserohgas, das neben Wasserstoff und Kohlenmonoxid auch Kohlendioxid und Schwefelkomponenten enthält, in den Wärmetauscher E4 eingeleitet und dort gegen anzuwärmende Verfahrensströme abgekühlt, bevor es über Leitung 15 der ebenfalls als Absorberkolonne ausgeführten Wascheinrichtung A2 in ihrem unteren Bereich aufgegeben werden kann. In der Absorberkolonne A2, die typischerweise bei Drücken zwischen 20 und 80bar betrieben wird, und die eine erste S3 und eine zweite Waschsektion S4 aufweist, strömt das abgekühlte Syntheserohgas 15 nach oben und wird dabei in intensiven Kontakt mit Methanolwaschmittel gebracht, das über die Leitung 16 aus der Regeneriereinrichtung R schwefelfrei zugeführt und am oberen Ende der Waschsektion S3 aufgegeben wird. Der schwefelfreie Methanolstrom 16 ist mit Kohlendioxid vorbeladen und tritt in die Waschsektion S3 mit einem Kohlendioxidpartialdruck ein, der größer ist als der Kohlendioxidpartialdruck in dem zu waschenden Syntheserohgas 15, aus dem deshalb zwar die Schwefelkomponenten, jedoch kein oder nur sehr wenig Kohlendioxid abgetrennt wird. Über einen Seitenabzug kann daher ein entschwefeltes Gasgemisch 17 abgezogen werden, das Wasserstoff und Kohlenmonoxid enthält und zu einem großen Teil aus Kohlendioxid besteht. Ein Teil des in der Waschsektion S3 entschwefelten Gasgemisches wird in die Waschsektion S4 weitergeleitet, wo durch das am Kopf der Waschkolonne A2 zugeführte unbeladene Methanol 18 auch das Kohlendioxid ausgewaschen wird, so dass ein aus Wasserstoff und Kohlenmonoxid bestehendes Gasgemisch 19 aus der Kolonne A2 geführt und nach Anwärmung gegen das abzukühlende Syntheserohgas 14 als gereinigtes Synthesegas 20 einer weiteren Verwertung zugeleitet werden kann. Zur Abtrennung von bei der Gaswäsche co-absorbiertem Wasserstoff und Kohlenmonoxid wird das beladene Waschmittel 21 aus dem Sumpf der Absorberkolonne A2 abgezogen und über das Drosselorgan d in das Entspannungsgefäß D3 entspannt, wobei eine vorwiegend aus Wasserstoff, Kohlenmonoxid und Kohlendioxid bestehende Gasphase 22 und mit Kohlendioxid und Schwefelkomponenten beladenes Methanol 23 entstehen. Während das beladene Methanol 23 in die Regeneriereinrichtung R eingeleitet wird, wird die Gasphase 22 zusammen mit der Gasphase 10 aus dem Entspannungsgefäß D2 über die Leitung 24 und den Verdichter V1 dem konvertierten Syntheserohgas 1 zugemischt. Optional können die beiden Gasphasen 10 und 22 ganz oder teilweise auch in das nicht konvertierte Syntheserohgas 14 eingeleitet werden. Die weitgehend schwefelfreie, Wasserstoff, Kohlenmonoxid und Kohlendioxid enthaltende Gasphase 9 aus dem Entspannungsgefäß D1 wird durch den Verdichter V2 auf den Druck des entschwefelten Gasgemisches 17 gebracht und mit diesem zum Gasstrom 25 vereinigt, der nach Anwärmung gegen das abzukühlende Syntheserohgas 14 schließlich einer Gasturbine (nicht dargestellt) als Brennstoff 26 zugeleitet wird.

## Patentansprüche

1. Verfahren zur Zerlegung eines Wasserstoff und Kohlendioxid enthaltenden Einsatzgases (1), aus dem in einer ersten Gaswäsche (A1) durch ein schwefelfreies Waschmittel (3) Kohlendioxid weitgehend selektiv ausgewaschen wird, wobei ein mit Kohlendioxid und co-absorbiertem Wasserstoff beladener Waschmittelstrom (4) anfällt, der nachfolgend in ein Entspannungsgefäß (D1) entspannt wird, um co-absorbierten Wasserstoff in die Gasphase (9) zu überführen, **dadurch gekennzeichnet, dass** die Wasserstoff enthaltende Gasphase (9) aus dem Entspannungsgefäß (D1) abgezogen und einem schwefelfreien, Wasserstoff und Kohlendioxid enthaltenden Gasgemisch (17) zugemischt wird, das in einer parallel zur ersten betriebenen zweiten Gaswäsche (A2) als Produkt mit einem Druck entsteht, der geringer ist, als der Druck des Einsatzgases (1).

2. Verfahren nach Anspruch 1, **dadurch gekennzeichnet, dass** das in der zweiten Gaswäsche (A2) als Produkt erzeugte Wasserstoff und Kohlendioxid enthaltende Gasgemisch (17) einer Gasturbine als Brenngas (26) zugeführt wird.

3. Verfahren nach einem der Ansprüche 1 oder 2, **dadurch gekennzeichnet, dass** die in der ersten (A1) und der zweiten Gaswäsche (A2) behandelten, Wasserstoff und Kohlendioxid enthaltenden Einsatzgase (1, 14) aus einem Syntheserohgas gewonnen werden, das dabei in wenigstens einen ersten und einen zweiten Teilstrom aufgeteilt wird, wobei der erste Teilstrom nach Konvertierung durch Wassergas-Shift der ersten Gaswäsche (A1) zugeführt wird, während der zweite Teilstrom direkt in die zweite Gaswäsche (A2) eingeleitet wird.

4. Verfahren nach einem der Ansprüche 1 bis 3, **dadurch gekennzeichnet, dass** in der ersten (A1) und in der zweiten Gaswäsche (A2) das gleiche Waschmittel (3, 18) eingesetzt wird.

5. Verfahren nach einem der Ansprüche 1 bis 4, **dadurch gekennzeichnet, dass** in der zweiten Gaswäsche (A2) aus dem Einsatzgas (14) durch ein mit Kohlendioxid vorbeladenes Waschmittel (16) Schwefelkomponenten weitgehend selektiv abgetrennt werden, wobei ein mit Schwefelkomponenten, Kohlendioxid und co-absorbiertem Wasserstoff beladener Waschmittelstrom (21) anfällt, der nachfolgend in ein weiteres Entspannungsgefäß (D3) entspannt wird, um co-absorbierten Wasserstoff in die Gasphase (22) zu überführen, die nachfolgend dem Einsatzgas (1) zur ersten (A1) und/oder dem Einsatzgas (14) zur zweiten Gaswäsche (A2) zugemischt wird.

## Claims

1. Method for fractionating a feed gas (1) containing hydrogen and carbon dioxide, from which feed gas carbon dioxide is largely selectively removed by scrubbing in a first gas scrubber (A1) using a sulphur-free scrubbing agent (3), wherein a scrubbing agent stream (4) laden with carbon dioxide and co-absorbed hydrogen is obtained which is subsequently expanded in an expansion vessel (D1) in order to convert co-absorbed hydrogen into the gas phase (9), **characterized in that** the hydrogen-containing gas phase (9) is drawn off from the expansion vessel (D1) and admixed with a sulphur-free gas mixture (17) containing hydrogen and carbon dioxide which arises in a second gas scrubber (A2) operated in parallel to the first as a product at a pressure which is lower than the pressure of the feed gas (1).

2. Method according to Claim 1, **characterized in that** the gas mixture (17) containing hydrogen and carbon dioxide produced as the product in the second gas scrubber (A2) is supplied as fuel gas (26) to a gas turbine.

3. Method according to one of Claims 1 and 2, **characterized in that** the feed gases (1, 14) containing hydrogen and carbon dioxide treated in the first (A1) and second gas scrubbers (A2) are obtained from a crude synthesis gas, which is divided into at least one first and one second sub-stream, wherein the first sub-stream is supplied after conversion by water-gas shift to the first gas scrubber (A1), while the second sub-stream is introduced directly into the second gas scrubber (A2).

4. Method according to one of Claims 1 to 3, **characterized in that** the same scrubbing agent (3, 18) is used in the first (A1) and in the second gas scrubber (A2).

5. Method according to one of Claims 1 to 4, **characterized in that**, in the second gas scrubber (A2), sulphur components are largely selectively separated from the feed gas (14) by a scrubbing agent (16) preladen with carbon dioxide, wherein a scrubbing agent stream (21) laden with sulphur components, carbon dioxide and co-absorbed hydrogen is obtained which is subsequently expanded in a further expansion vessel (D3) in order to convert co-absorbed hydrogen into the gas phase (22), which is subsequently admixed with the feed gas (1) for the first (A1) and/or the feed gas (14) for the second gas scrubber (A2).

## Revendications

1. Procédé de fractionnement d'un gaz de charge (1) contenant de l'hydrogène et du dioxyde de carbone, duquel on extrait par lavage largement sélectif du dioxyde de carbone au moyen d'une lessive sans soufre (3) dans un premier lavage de gaz (A1), dans lequel on obtient un courant de lessive (4) chargé de dioxyde de carbone et d'hydrogène co-absorbé, que l'on détend ensuite dans une cuve de détente (D1), afin de transférer de l'hydrogène co-absorbé dans la phase gazeuse (9), **caractérisé en ce que** l'on aspire la phase gazeuse (9) contenant de l'hydrogène hors de la cuve de détente (D1) et on l'ajoute à un mélange de gaz sans soufre (17), contenant de l'hydrogène et du dioxyde de carbone, qui se forme dans un deuxième lavage de gaz (A2) opérant parallèlement au premier sous forme de produit avec une pression qui est inférieure à la pression du gaz de charge (1).

2. Procédé selon la revendication 1, **caractérisé en ce que** l'on envoie à une turbine à gaz comme combustible (26) le mélange de gaz (17) contenant de l'hydrogène et du dioxyde de carbone produit comme produit dans le deuxième lavage de gaz (A2).

3. Procédé selon une des revendications 1 ou 2, **caractérisé en ce que** l'on obtient les gaz de charge (1, 14) traités dans le premier (A1) et dans le deuxième (A2) lavages de gaz et contenant de l'hydrogène et du dioxyde de carbone à partir d'un gaz brut de synthèse, que l'on divise en l'occurrence en au moins un premier et un deuxième courants partiels, dans lequel on envoie le premier courant partiel après conversion par la réaction du gaz à l'eau au premier lavage de gaz (A1), tandis que l'on introduit le deuxième courant partiel directement dans le deuxième lavage de gaz (A2).

4. Procédé selon l'une quelconque des revendications 1 à 3, **caractérisé en ce que** l'on on utilise la même lessive (3, 18) dans le premier (A1) et dans le deuxième (A2) lavages de gaz.

5. Procédé selon l'une quelconque des revendications 1 à 4, **caractérisé en ce que** l'on sépare de façon largement sélective dans le deuxième lavage de gaz (A2) des composants sulfurés hors du gaz de charge (14) au moyen d'une lessive (16) pré-chargée de dioxyde de carbone, dans lequel on obtient un courant de lessive (21) chargé de composants sulfurés, de dioxyde de carbone et d'hydrogène co-absorbé, que l'on détend ensuite dans une autre cuve de détente (D3), afin de transférer de l'hydrogène co-absorbé dans la phase gazeuse (22), que l'on ajoute ensuite au gaz de charge (1) pour le premier lavage de gaz (A1) et/ou au gaz de charge (14) pour le deuxième lavage de gaz (A2).
